# EUROPEAN PATENT SPECIFICATION

(11) **EP 0 680 264 B1**
(45) Date of publication and mention of the grant of the patent: **18.12.1996**
(21) Application number: 94904784.9
(22) Date of filing: 20.01.1994
(51) Int. Cl.: A23N 7/00, F16K 39/02

(54) **BLOW-OFF COCK FOR A STEAM VESSEL**
ABBLASVENTIL FÜR EIN DAMPFGEFÄSS
ROBINET DE PURGE POUR UN RESERVOIR DE VAPEUR

(30) Priority: 22.01.1993 NL 9300133
(43) Date of publication of application: 08.11.1995
(73) Proprietor: GOUDSCHE MACHINEFABRIEK B.V., NL-2741 PD Waddinxveen (NL)
(72) Inventor: VAN DER SCHOOT, Peter Willem Carolus, NL-2964 AG Groot-Ammers (NL)
(74) Representative: Smulders, Theodorus A.H.J., Ir.
(86) International application number: NL9400012
(87) International publication number: WO9416580

(56) References cited:
- EP-A- 0 431 702
- GB-A- 2 164 423
- NL-A- 6 610 462
- US-A- 1 768 582

## Description

The invention relates to a blow-off cock intended for a steam vessel and comprising a housing having a supply opening and a blow-off opening, the supply opening being closable by means of a valve member comprising a valve disc coacting with a valve seat in the housing, a piston member and a shank member connecting the valve disc and the piston member, the piston member forming a wall of a cylindrical chamber movable through displacement means, and a blow-off duct, connecting to the blow-off opening, extending substantially transverse to the cylindrical chamber.

Such a blow-off cock for a steam vessel is disclosed in European patent application 0 431 702 and may for instance be used in a potato scraping machine, wherein it may be of great significance that the steam contained in the vessel and put under a high pressure is discharged very quickly via the blow-off cock in order that the peels steamed from the potatoes are entrained with the steam.

For this purpose, the known steam vessel comprises a first bypass between the cylindrical chamber and a pressure opening located in the steam supply duct of the steam vessel. Arranged in this first bypass is a motor-controlled control valve. The pressure opening in the steam supply duct is arranged between two ball valves through which the steam supply duct can be closed. Further, in this known steam vessel, a second bypass is arranged between the cylindrical chamber and the third end of the blow-off cock, connectable to the blow-off duct, in which second bypass there are also arranged a motor-controlled control valve and a manually operated throttle valve.

The known steam vessel is used as follows. In the steam supply duct, steam is pressurized, with the first ball valve, located at the side of the steam vessel relative to the pressure opening, being at least substantially closed, while the second ball valve is open, the control valve in the first bypass is in the open position, and the control valve in the second bypass is closed. Consequently, the pressure in the cylindrical chamber is increased, as a result of which the blow-off cock is brought into its closed position. Subsequently, the second ball valve is opened, allowing the steam to flow into the steam vessel.

When the steam is to be discharged from the steam vessel, the steam supply duct is closed, as is the control valve in the first bypass, after which the control valve in the second bypass is opened. As a result, the pressure in the cylindrical chamber decreases, so that the blow-off cook is controlled into the open position by the pressure in the steam vessel and the steam is allowed to flow into the blow-off duct.

Due to the construction and control of the known steam vessel, strong fluctuations occur in the flow of steam from the steam vessel when steam is being blown off, while, moreover, the valve members are under a relatively high load, as will be explained hereinbelow.

When steam is being blown off from the steam vessel, the pressure in the steam vessel quickly decreases, doing so more quickly than the pressure in the cylindrical chamber. As a result, at a given moment, the closing force produced by the piston will, due to the pressure in the cylindrical chamber, be greater than the opening force produced by the pressure in the steam vessel, so that the blow-off cock will be controlled into a partly closed position again, as a consequence of which the flow rate through the blow-off cook becomes less. The result is that the pressure in the cylindrical chamber will again decrease more quickly than the pressure in the steam vessel, as a consequence of which the blow-off cook will be controlled into the open position again, etcetera. Hence, the valve member will make an oscillating movement, so that the steam discharge, and hence the operation of the potato scraping machine, will be obstructed, and the different valve members will be under a relatively heavy load.

If the flow rate of the second bypass is increased, for instance by controlling the control valve into the completely open position and omitting the throttle valve, the pressure in the cylindrical chamber will decrease so quickly, that the valve member is hardly damped in its movement, so that, again, great loads will act on the different valve members.

Hence, the object of the invention is to provide a blow-off cock of the type described in the preamble, wherein the discharge of steam can take place in a minimal time without oscillating movement of the valve member and wherein the forces acting on the different valve members are limited. Moreover, the aim is to provide a blow-off cock which is simple both in construction and in use.

To this end, the blow-off cook according to the invention is characterized in that the cylindrical chamber is always in open communication, by means of a passage in the valve member, with a side of the valve disc coacting with the valve seat, which passage opens into the cylindrical chamber adjacent to the surface of the piston member and has a mouth on the side of the valve disc coacting with the valve seat, which mouth is guarded in a direction perpendicular to the valve disc, the passage having a width dimensioned such that when the blow-off cock is opened, the pressure on the side of the valve disc coacting with the valve seat decreases more quickly than in the cylindrical chamber, while the displacement means press the valve member toward its open position independently of the pressure decrease.

These features effect that the cylindrical chamber and the side of the valve disc coacting with the valve seat are always in open communication with each other, so that when the blow-off cook is closed, the pressure in the cylindrical chamber is always equal to the pressure in the steam vessel, so that the valve member can easily be moved into a closed position and held in that position. The open connection is dimensioned such that when the blow-off cock is opened, the pressure on the side of the valve disc coacting with the valve seat decreases more quickly than the pressure in the cylindrical chamber, with the means for displacing the valve member displacing it toward its open position independently of the pressure decrease. These features prevent the valve member from starting to move in an oscillating manner or from slipping toward the open position too quickly. After all, after the blow-off cock has been opened, the pressure in the steam vessel will always be lower than the pressure in the cylindrical chamber, so that the force applied to the valve member by the steam is always in the same direction. Because the valve displacement means are arranged to displace the valve member toward an open position independently of the pressure decrease, the blow-off cock can quickly be opened entirely, and remain open, without any further control valves and the like, which ensures its proper operation.

This proper operation partly depends on the passage remaining open. As together with the blown-off steam, dirt and peels are discharged as well, the passage opening into the valve disc is susceptible to obstruction. In order to ensure that the passage remains open, it is guarded relative to the blown-off steam. In spite of this, it is still possible that light dirt particles are entrained by the steam via the passage into the cylindrical chamber. To prevent these particles from contaminating that chamber more or less permanently and thus from possibly causing problems, the mouth of the passage is arranged in the surface of the piston member, i.e. always at the lowest level in the chamber, allowing the dirt particles gathering on the surface of the piston member to be discharged again by the steam flowing back.

The guarding of the mouth of the passage at the valve disc can be realized in an advantageous manner by means of a conical member having a tip and a base surface, the tip being remote from the valve disc and the relevant mouth being located between the side of the valve disc coacting with the valve seat and the base surface. Such conical construction does not only provide a proper guarding, but has also flow-technical advantages. Further, due to steam flowing past, a partial vacuum is generated under the cone, which promotes the relief of the cylindrical chamber.

According to a further embodiment of the blow-off cock according to the invention, the surface of the piston member is 10-40% larger than the surface of the opening of the valve seat. Consequently, in the closed position of the valve member, the closing force exerted from the cylindrical chamber will always be greater than the force exerted from the steam vessel, which tries to open the valve. Hence, a reliable closure is always ensured.

In a further embodiment of the blow-off cock according to the invention, the displacement means comprise an auxiliary piston accommodated in a cylindrical housing, which auxiliary piston is connected to one end of a shank whose other end is connected to the piston member, means being present for energizing the auxiliary piston on two sides. In this manner, the valve member can, by means of the control member, simply be moved upward and downward and held in those positions while for the operation thereof, no use has to be made of the pressure in the steam vessel or in one of the ducts connected thereto. The advantage thereof is that the forces exerted on the valve member by the displacement means are independent of the pressure increase or decrease in the steam vessel, the cylindrical chamber and the ducts.

In a further embodiment of the blow-off cook according to the invention, the displacement means are spaced from the cylindrical chamber, so that the displacement means are not influenced by steam escaping from the blow-off cock, in particular the cylindrical chamber.

In a further preferred embodiment of the invention, for instance, the cylindrical housing is connected to the housing of the blow-off cock by means of spacer sleeves, the shank extending through an opening in the wall of the cylindrical housing and an opening in a wall of the cylindrical chamber between the spacer sleeves. If the shank comprises indicating means for determining the position of the valve member, the position of the valve member within the blow-off cock can be perceived from the outside, so that the action of the blow-off cock can at all times be checked and adjusted in a simple manner.

In a further embodiment of the blow-off cock according to the invention, a cylindrical raised portion is provided on either side of the auxiliary piston, which raised portion has a section smaller than that of the auxiliary piston, and the cylindrical housing has end walls provided, at the inside thereof, with cylindrical recesses having a section corresponding to that of the raised portions. Further, the height of each raised portion is greater than the depth of the adjacent recess, so that at the end of an upward or downward stroke, the auxiliary piston and, accordingly, the valve member, are additionally damped through compression of the enclosed fluid.

Preferably, when a blow-off cock according to the invention is used in an embodiment with an auxiliary piston, a control device is present provided with a fluid compressor connected to a first and second duct connected to the housing of the auxiliary piston, with switching means effecting, in a first position, the supply of fluid to the cylindrical housing via the first duct and the discharge of fluid from the cylindrical housing via the second duct, and, in a second position, the supply of fluid to the cylindrical housing via the second duct and the discharge of fluid from the cylindrical housing via the first duct, and with regulating means effecting in both the first and the second position of the switching means that the supply of the fluid is quicker than the discharge thereof. Such a control device enables the damping of the auxiliary piston, and hence the damping of the valve member, to be controlled by controlling the feed and discharge of the fluid in the auxiliary piston. In this manner, it is possible to adapt the damping to the steam pressure in the vessel, so that the load of the different valve members can always be kept at a minimum independently of the steam pressure and the pressure increase and decrease.

To explain the invention, exemplary embodiments of the blow-off cock according to the invention will be described hereinafter with reference to the accompanying drawings.
Fig. 1 is a schematic representation of a portion of a potato scraper, comprising a steam vessel having a blow-off cock according to the invention;
Fig. 2 is a schematic representation, in section, of a first embodiment of the blow-off cock;
Fig. 3 shows in cross section the blow-off cock comprising an auxiliary piston; and
Fig. 4 schematically shows in cross section a second embodiment of the blow-off cock.

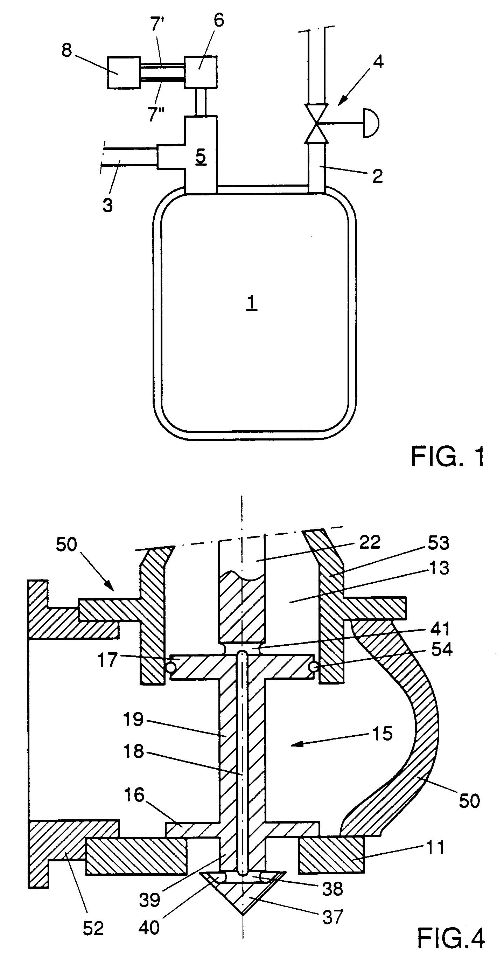

Fig. 1 schematically shows a portion of a potato scraper, comprising a steam vessel 1 having a steam supply duct 2 and a blow-off duct 3. Arranged within the steam supply duct 2 is a shut-off valve 4, and the steam vessel 1 is connected to the blow-off duct 3 by means of a blow-off cock 5. For energizing the blow-off cock 5, displacement means 6 are provided, connected to a control device 8 by means of ducts 7. The operation of the blow-off cock takes place as follows.

When the shut-off valve 4 is open and the blow-off cock 5 is closed, steam is introduced into the steam vessel 1 via the steam supply duct 2 until the operating pressure is reached in the steam vessel 1. After a predetermined period, the shut-off valve 4 is closed.

After the steam scraping operation, the steam should be discharged from the steam vessel 1 within a very short time so as to entrain the peels steamed from the potatoes. For this purpose, the blow-off cock 5 is opened by means of the displacement means 6, with the control device 8 energizing the displacement means via the ducts 7 in such a manner that the blow-off cock 5 is directly brought into a completely opened position and held in that position.

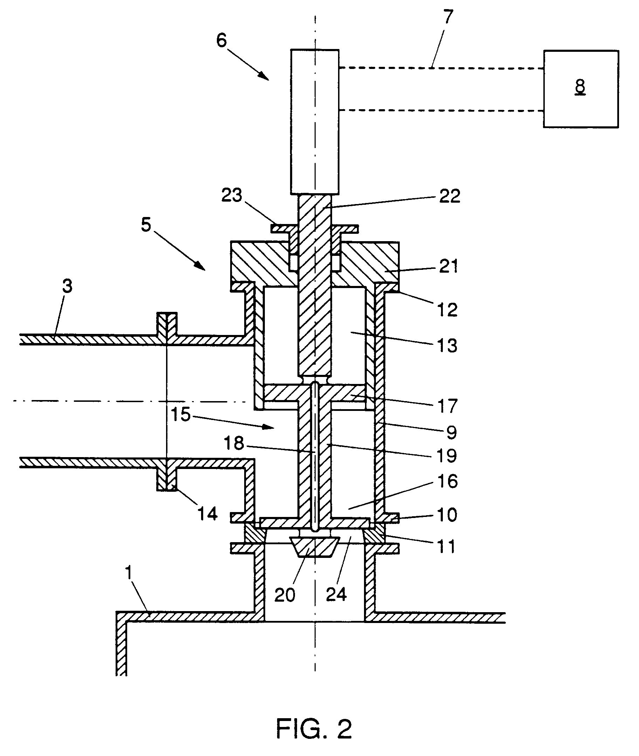

Fig. 2 is a schematic representation in cross section of a blow-off cock 5, arranged between the steam vessel 1 and the blow-off duct 3, in the closed position. The blow-off cock 5 comprises a housing, substantially formed by a T-shaped duct portion 9. Arranged adjacent to the first end 10, proximal to the steam vessel 1, of the duct portion 9 is a valve seat 11, and at the second end 12, located opposite the first end 10, of the duct 9 a substantially closed, cylindrical chamber 13 is formed. The third end 14 of the duct portion 9 is connectable to the blow-off duct 3.

In the duct portion 9, between the first end 10 and the second end 12, a valve member 15 is movably accommodated, provided with a valve disc 16 capable of coacting with the valve seat 11. The end of the valve member 15 located opposite the valve disc 16 comprises a piston member 17, forming a movable wall of the cylindrical chamber 13 and connected to the valve disc 16 by means of a shank member 19. By means of an operating rod 22 extending through an opening in the end wall 21 of the cylindrical chamber 13, the valve member 15 is sealingly connected by means of a gland 23 to the displacement means 6.

The cylindrical chamber 13 and the side of the valve disc 16 facing the steam vessel 1 are constantly in open communication with each other by means of a passage 18 provided in the valve member 15, so that at least in a closed position of the blow-off cock 5, i.e. when the valve disc 16 rests on the valve seat 11, the pressure in the steam vessel 1 corresponds to the pressure in the chamber 13. The surface of the piston member 17 facing that chamber is approximately 1.2 to 1.4 times the size of the opening 24 in the valve seat 11, as a result of which, when the blow-off cock 5 is closed, the valve member 15 is constantly pressed towards the closed position.

The passage 18 is formed by a central bore in the shank member 19. At one end, the central bore is in open communication with the cylindrical chamber 13 by means of a transverse bore in the operating rod 22 at the location where it is connected to the piston member 17. The other end of the central bore also ends in a transverse bore in an extension of the shank member 19 extending beyond the valve disc 16, which extension ends in a truncated conical member 20 guarding the open ends of the transverse bore in the direction of the steam vessel 1.

The passage 18 in the valve member 15 is dimensioned such that when the blow-off cock 5 is opened, the pressure at the valve disc 16 decreases more quickly than the pressure in the cylindrical chamber 13. In this manner, when the blow-off cock 5 is being opened, the pressure in that chamber 13 will always be higher than the pressure at the valve disc 16, resulting in a force exerted on the valve member 15 which is continuously directed toward the valve seat 11. In order that the valve member 15 is moved in a stable and simple manner to the opened position, the displacement means 6 need only exert a greater force directed away from the valve seat 11.

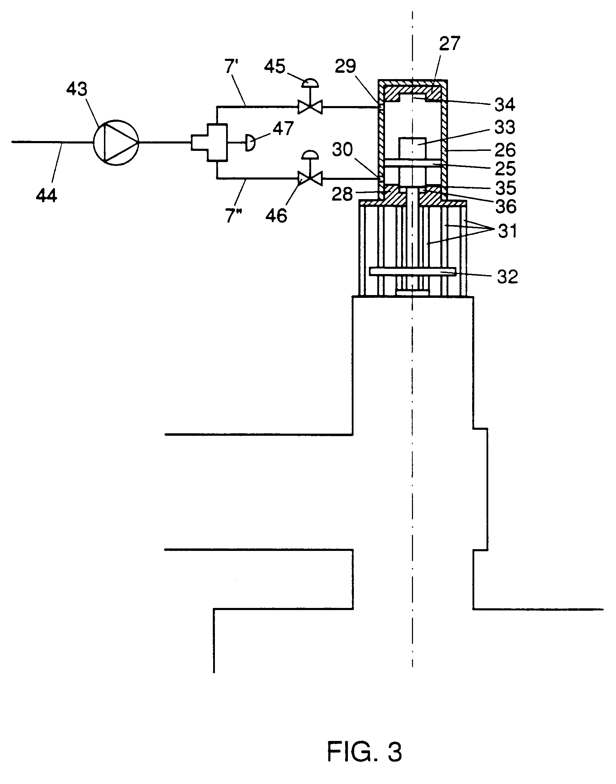

In the embodiment of the blow-off cock shown in Fig. 3, the displacement means comprise a double-acting auxiliary piston 25, movably accommodated in a cylindrical housing 26, connected to the end wall 21 by means of a plurality of spacer sleeves 31. At the end proximal to the valve member, the cylindrical housing 26 is closed by a first end wall 28, provided with an opening for leading through the operating rod 22, and at the other end it is closed by a closed second end wall 27. Provided in the side wall of the cylindrical housing 26, adjacent to the first end wall 28, is a first feed-through opening 30, and adjacent to the second end wall 27 is a second feed-through opening 29. The cylindrical housing 26, the auxiliary piston 25 and the feed-through openings 29, 30 are dimensioned and positioned such that in the two extreme positions of the auxiliary piston 25, the two feed-through openings 29, 30 are located on either side of the auxiliary piston 25.

Connected to the two feed-through openings 29, 30 is a duct for the supply and discharge of compressed air. The top duct 7' and the bottom duct 7'' are connected to the control device 8, comprising an air compressor 43 and regulating valves 45 and 46 arranged in the ducts 7' and 7''. Connected to the air compressor 43 is an air duct 44. The control device 8 further comprises a controlled control valve 47 for connecting the top duct 7' or the bottom duct 7'' to the outlet side of the compressor 43.

On either piston surface, the auxiliary piston 25 comprises a cylindrical, centrally provided raised portion 33, 35, while each end face 27, 28 comprises a cylindrical, centrally provided recess 34, 36. In either extreme position of the auxiliary piston 25, one of the raised portions 33, 35 is received in the corresponding recess 34, 36, including a substantially closed space.

Between the spacer sleeves 31, at right angles to the operating rod 22 and fixedly connected therewith, an indication ring 32 extends. On the basis of the position of the indication ring 32 relative to, for instance, the space sleeves 31, it is possible to directly read the position of the valve member 15 within the T-shaped duct portion 9. The indication ring 32 has a surface which approximately corresponds to the surface, facing the cylindrical chamber 13, of the piston member 17 of the valve member 15. This prevents steam which may escape through the opening in the end wall 21 of the cylindrical chamber 13 from damaging the displacement means 6.

Fig. 4 shows a second variant of the blow-off cock according to the invention. In this variant, the valve member used is substantially identical to the one used in the embodiment according to Fig. 2 and is therefore designated by the same reference numerals. The construction of the end of the passage 18 located at the steam vessel is different. At that location, there is provided a conical body 37 arranged on a narrowed portion 39 of the valve member 15, adjacent to the valve disc 16, the tip of which conical body points in the direction of the steam vessel 1 and whose base has a surface area larger than the cross-sectional surface area of the narrowed portion 39 of the valve member 15. On the side of the conical body 37 facing the valve disc 16, an annular dishing 40 is provided round the narrowed portion 39. The passage 18 opens into the dishing 40. These features have as an advantage that when the blow-off cock 5 is opened, the valve member 15 is centred relative to the valve seat 11 due to the steam flowing past the conical body 37, so that undesired turbulences, vibrations and damages to the different portions of the blow-off cock are avoided. Further, inlet 38 of the passage 18 is guarded against the penetration of dirt, such as peels and the like, while, when the blow-off cock is opened, a partial vacuum is generated under the base surface of the conical body 37 and in the annular dishing 40 by the steam flowing past, promoting the decrease of the pressure in the cylindrical chamber 13.

Further, in Fig. 4, the construction of the housing of the blow-off cock differs from that of Fig. 2. In the embodiment shown in Fig. 2, the cylindrical chamber 13 is formed by a cylindrical sleeve with an end wall 21, which sleeve is slid into the second end 12 of the T-shaped housing 9, with the piston member 17 coacting with the wall of the cylindrical sleeve. In the embodiment according to Fig. 4, the blow-off cock 50 comprises a substantially spherical housing 51 with a blow-off stub 52. Perpendicularly to the blow-off stub 52, the housing 51 is provided with two passages that are in line, one passage comprising a valve seat 11 and the other passage comprising a sleeve-shaped portion 53 forming the cylindrical chamber 13. Via a piston ring 54, the piston member 17 cooperates with the inner wall of the sleeve-shaped portion 53.

The operation of the blow-off cock through the displacement means 6 and the control device 8 is as follows.

When the blow-off cock is closed, the valve disc 16 rests on the valve seat 11, while the valve member 15 is held in the closing position by at least the pressure in the cylindrical chamber 13. If so desired, the closing force can be increased or decreased by means of the auxiliary piston 25.

For opening the blow-off cock, air is pressed by the compressor 43 into the bottom duct 7'' via the control valve 47, whereby the regulating valve 46 is opened so that the compressed air flows into the cylindrical housing 26 on the bottom side of the auxiliary piston 25. At the same time, via the top duct 7', air is discharged from the portion of the cylindrical housing 26 located above the auxiliary piston 25, whereby the regulating valve 45 is controlled into the open position in such a manner that the upward speed of the auxiliary piston 25 does not become too great.

As soon as the auxiliary piston 25 approaches its top extreme position, the raised portion 33 is received in the recess 34, so that air is enclosed and compressed, as a consequence of which the auxiliary piston 25, and hence the displacement of the valve member 15, is retarded, after which the auxiliary piston 25 is fixed in its top position by the compressed air.

By choosing the opening speed of the valve member 15 to be high, the steam can quickly be discharged from the steam vessel 1, so that the peels steamed from the potatoes are entrained. In spite of the fact that the pressure on the steam vessel side of the valve disc 16 decreases more quickly than in the cylindrical chamber 13, the valve member will always move upward due to a suitable energization of the auxiliary piston. A suitable choice of the compressed air pressure on either side of the auxiliary piston 25 makes it possible to choose the speed to be high without the danger of excess loads when the various moving parts are accelerated or retarded, while the raised portions 33, 35 and recesses 34, 36 provide a braking.

When the blow-off cock is closed, the control valve 47 is reversed, and the regulating valves 45, 46 are regulated such that compressed air is passed via the top duct 7' to the portion of the cylindrical housing 26 located above the auxiliary piston 25, while the air is discharged from the bottom portion. When the bottom extreme position of the auxiliary piston 25 is approached, the raised portion 35 and recess 36 provided on that side have the same damping action as the raised portion 33 and recess 34 described above. Consequently, the blow-off cock can also be closed quickly, simply and safely without the danger of excess loads on the different parts.

As the moving parts of the blow-off cock, such as the valve member 15 and the auxiliary piston 25, are of a light construction, the speed of movement thereof can be chosen to be high, yielding an excellent operation of the steam vessel with few control and operating means. The different moving parts can be of a relatively light construction because the loads acting thereon can be relatively low, due to compensation thereof, despite a possibly very high operating pressure in the steam vessel.

The blow-off cock according to the invention has been described with reference to exemplary embodiments shown in the drawings, but is by no means limited thereto, the extent of protection being limited by the scope of the claims. For instance, as operating means for the blow-off cock an (electro)magnetic energization of the operating rod may be chosen. Further, the blow-off cock according to the invention may be arranged directly in a steam duct instead of at a steam vessel.

## Claims

1. A blow-off cock for a steam vessel (1), comprising a housing (9; 51) having a supply opening and a blow-off opening, the supply opening being closable by means of a valve member (15) comprising a valve disc (16) coacting with a valve seat (11) in the housing, a piston member (17) and a shank member (19) connecting the valve disc and the piston member, the piston member forming a wall of a cylindrical chamber (13) movable through displacement means (6), and a blow-off duct (3), connecting to the blow-off opening, extending substantially transverse to the cylindrical chamber (13), characterized in that the cylindrical chamber (13) is always in open communication, by means of a passage (18) in the valve member (15), with a side of the valve disc (16) coacting with the valve seat (11), said passage opening into the cylindrical chamber adjacent to the surface of the piston member (17) and having a mouth on the side of the valve disc coacting with the valve seat which is guarded in a direction perpendicular to the valve disc, the passage having a width dimensioned such that when the blow-off cock (5; 50) is opened, the pressure on the side of the valve disc coacting with the valve seat decreases more quickly than in the cylindrical chamber, while the displacement means (6) press the valve member toward its open position independently of the pressure decrease.

2. A blow-off cock according to claim 1, characterized in that said mouth is guarded by a conical member (37) having a tip and a base surface, the tip being remote from the valve disc (16) and said mouth being located between the side of the valve disc coacting with the valve seat (11) and the base surface.

3. A blow-off cock according to claim 2, characterized in that the conical member (37) is connected to the valve member (15) by a narrowed portion (39) having a smaller section than the base surface of the conical member, said base surface being provided with a dishing (40) extending round the narrowed portion and into which the passage (18) opens.

4. A blow-off cock according to any one of the preceding claims, characterized in that the surface of the piston member (17) is 10-40% larger than the surface of the free passage in the valve seat (11).

5. A blow-off cock according to any one of the preceding claims, characterized in that the displacement means (6) comprise an auxiliary piston (25) accommodated in a cylindrical housing (26) and connected to one end of a shank (22) whose other end is connected to the piston member (17), means being present for energizing the auxiliary piston on two sides.

6. A blow-off cock according to any one of the preceding claims, characterized in that the cylindrical chamber (13) is formed by a lid mountable in the housing (9; 51) comprising an end wall (21) and a sleeve extending from the end wall, capable of being accommodated in the housing.

7. A blow-off cock according to any one of the preceding claims, characterized in that the displacement means (6, 8) are spaced from the cylindrical chamber (13).

8. A blow-off cock according to claims 5-7, characterized in that the cylindrical housing (26) is connected to the housing (9; 51) of the blow-off cock (5; 50) by means of spacer sleeves (31), the shank (22) extending through an opening in the wall of the cylindrical housing (26) and an opening in the end wall (21) between the spacer sleeves and comprising indicating means (32) for determining the position of the valve member (15) in the blow-off cock.

9. A blow-off cock according to any one of claims 5-8, characterized in that on either side of the auxiliary piston (25) a cylindrical raised portion (33, 35) is provided having a section smaller than that of the auxiliary piston (25), the cylindrical housing (26) comprising end walls (27, 28) provided, at the inside thereof, with cylindrical recesses (34, 36) having a section substantially corresponding to that of the raised portions (33, 25), the height of the raised portions (33, 35) being greater than the depth of the recesses (34, 36).

10. A blow-off cock according to any one of claims 5-9, characterized by a control device (8) provided with a fluid compressor (43) connected to a first (7') and second duct (7'') connected to the housing (26) of the auxiliary piston (25), with switching means (47) effecting, in a first position, the supply of fluid to the cylindrical housing (26) via the first duct (7') and the discharge of fluid from the cylindrical housing (26) via the second duct (7''), and, in a second position, the supply of fluid to the cylindrical housing (26) via the second duct (7'') and the discharge of fluid from the cylindrical housing (26) via the first duct (7'), and with regulating means (45, 46) effecting in both the first and the second position of the switching means (47) that the supply of the fluid is quicker than the discharge thereof.

## Patentansprüche

1. Abblasventil für ein Dampfgefäß (1), das ein Gehäuse (9;51) mit einer Zufuhröffnung und einer Abblasöffnung aufweist, wobei die Zufuhröffnung mittels eines Ventilteils (15), das eine Ventilscheibe (16) aufweist, die mit einem Ventilsitz (11) in dem Gehäuse zusammenwirkt, verschließbar ist, ein Kolbenteil (17) und ein die Ventilscheibe und das Kolbenteil verbindender Schaft (19) aufweist, wobei das Kolbenteil eine durch Verschiebemittel (6) bewegbare Wand einer zylindrischen Kammer (13) bildet, und eine Abblasleitung (3), die mit der Abblasöffnung verbunden angeordnet ist, und sich im wesentlichen quer zu der zylindrischen Kammer (13) erstreckt, dadurch gekennzeichnet, daß sich die zylindrische Kammer (13) mittels eines Durchgangs (18) in dem Ventilteil (15) immer in offenen Verbindung steht mit einer Seite der Ventilscheibe (16) die mit dem Ventilsitz (11) zusammenwirkt, und der Durchgang in die an die Oberfläche des Kolbenteils (17) angrenzend angeordnete zylindrische Kammer mündet, und auf der mit dem Ventilsitz zusammenwirkenden Seite der Ventilscheibe eine Mündung aufweist, die in senkrechter Richtung zur Ventilscheibe verdeckt ist, wobei der Durchgang eine derart dimensionierte Breite aufweist, daß beim Öffnen des Abblashahnes (5;50) der Druck auf der mit dem Ventilsitz zusammenwirkenden Seite der Ventilscheibe schneller abfällt, als in der zylindrischen Kammer, während die Verschiebemittel (6) das Ventilteil unabhängig von dem Druckabfall in Richtung seiner offenen Position drücken.

2. Abblashahn nach Anspruch 1, dadurch gekennzeichnet, daß die Mündung durch ein eine Spitze und ein eine Grundfläche aufweisendes, konisches Teil (37) verdeckt ist, wobei die Spitze räumlich von dem Ventilsitz (16) enfernt, und die Mündung zwischen der mit dem Ventilsitz (11) zusammenwirkenden Seite der Ventilscheibe und der Grundfläche angeordnet ist.

3. Abblashahn nach Anspruch 2, dadurch gekennzeichnet, daß das konische Teil (37) über ein verjüngtes Teil (39), das einen kleineren Querschnitt als die Grundfläche des konischen Teils aufweist, mit dem Ventilteil (15) verbunden ist, wobei die Grundfläche des konischen Teils eine sich um das verjüngte Teil herum erstreckende Vertiefung (40) aufweist, in die der Durchgang (18) mundet.

4. Abblasventil nach einem der vorstehenden Ansprüche, dadurch gekennzeichnet, daß die Oberfläche des Kolbenteils (17) 10-40% größer ist, als die Oberfläche der freien Passage im Ventilsitz (11).

5. Abblasventil nach einem der vorstehenden Ansprüche, dadurch gekennzeichnet, daß die Verschiebemittel (6) einen in einem zylindrischen Gehäuse (26) aufgenommen Hilfskolben (25) umfassen, der mit einem Ende eines Schafts (22) verbunden ist, und dessen anderes Ende mit dem Kolbenteil (17) verbunden ist, wobei Mittel anwesend sind um den Hilfskolben von zwei Seiten heranzutreiben.

6. Abblasventil nach einem der vorstehenden Ansprüche, dadurch gekennzeichnet, daß die zylindrische Kammer (13) durch einen in dem Gehäuse (9;51) montierbare Deckel gebildet wird, der eine Endwand (21) und eine Buchse umfaßt, die von der Endwand ausgeht, und die in dem Gehäuse aufnehmbar angeordnet ist.

7. Abblasventil nach einem der vorstehenden Ansprüche, dadurch gekennzeichnet, daß die Verschiebemittel (6,8) entfernt von der zylindrischen Kammer (13) angeordnet sind.

8. Abblasventil nach einem der Ansprüche 5-7, dadurch gekennzeichnet, daß das zylindrische Gehäuse (26) met dem Gehäuse (9;51) des Abblasventils (5;50) mittels Abstandsbuchsen (31) verbunden ist, wobei der Schaft (22) durch eine Öffnung in der Wand des zylindrischen Gehäuses (26) und eine Öffnung in der Endwand (21) zwischen den Abstandsbuchsen hindurchragt, und Anzeigemittel (32) umfaßt, um die Position des Ventilteils (15) im Abblasventil zu bestimmen.

9. Abblasventil nach einem der Ansprüche 5-8, dadurch gekennzeichnet, daß auf jede der beiden Seiten des Hilfskolbens (25) ein zylindrisches, erhöhtes Teil (33, 35) vorgesehen ist, das einen kleineren Querschnitt hat als den des Hilfskobens (25), wobei das zylindrische Gehäuse (26) Endwände (27,28) aufweist, die an ihrer Innenseite mit zylindrischen Aussparungen (34, 36) versehen sind, und die einen Querschnitt aufweisen, der im wesentlichen derjenigen der erhöhten Teile (33, 25) entspricht, wobei die Höhe der erhöhten Teile (33,35) größer ist, als die Tiefe der Aussparungen (34,36).

10. Abblasventil nach einem der Ansprüche 5-9,
gekennzeichnet, durch ein Steuerungsgerät (8), das mit einem Flüssigkeitskompressor (43) versehen ist, der mit einer ersten (7') und einer zweiten (7''), mit dem Gehäuse (26) des Hilfskolbens (25) verbundenen Leitung verbunden ist, und mit einem Schaltmittel (47), das in einer ersten Position die Förderung von Flüssigkeit zu dem zylindrischen Gehäuse (26) über die erste Leitung (7') und den Abfluß von Flüssigkeit von dem zylindrischen Gehäuse (26) über die zweite Leitung (7'') und, in einer zweiten Position, die Förderung von Flüssigkeit an das zylindrische Gehäuse (26) über die zweite Leitung (7'') und den Abfluß von Flüssigkeit von dem zylindrischen Gehäuse (26) über die erste Leitung (7') bewirkt, und Reguliermittel (45,46) aufweist, die sowohl in der ersten, als auch in der zweiten Position des Schaltmittels (47) bewirken, daß die Förderung der Flüssigkeit schneller vonstatten geht, als deren Abfluß.

## Revendications

1. Un robinet de vidange pour un réservoir à vapeur (1), comprenant un corps (9; 51) possédant une ouverture d'alimentation et une ouverture de vidange, l'ouverture d'alimentation pouvant être fermée à l'aide d'un élément vanne (15) comprenant un disque de vanne (16) agissant sur un siège de vanne (11) dans le corps, un élément piston (17) et un élément tige (19) reliant le disque de vanne et l'élément piston, l'élément piston formant une paroi d'une chambre cylindrique (13) pouvant être mue à l'aide d'un élément de déplacement (6), et un conduit de vidange (3) raccordé à l'ouverture de vidange, s'étendant pratiquement transversalement à la chambre cylindrique (13), caractérisé en ce que la chambre cylindrique (13) est toujours en communication ouverte, à l'aide d'un passage (18) dans l'élément vanne (15), avec un côté du disque de vanne (16) agissant sur le siège de vanne (11), ledit passage débouchant dans la chambre cylindrique adjacente à la surface de l'élément piston (17) et ayant une embouchure sur le comté du disque de vanne agissant sur le siège de vanne, qui est protégée dans une direction perpendiculaire au disque de vanne, le passage ayant une largeur dimensionnée de telle manière que, lorsque le robinet de vidange (5; 50) est ouvert, la pression sur le côté du disque de vanne agissant sur le siège de vanne diminue plus rapidement que dans la chambre cylindrique, tandis que le moyen de déplacement (6) pousse l'élément vanne vers sa position ouverte indépendamment de la diminution de pression.

2. Un robinet de vidange suivant la revendication 1, caractérisé en ce que ladite embouchure est protégée par un élément conique (37) ayant une surface de sommet et une surface de base, le sommet étant éloigné du disque de vanne (16) et ladite embouchure étant située entre le côté du disque de vanne agissant sur le siège de vanne (11) et la surface de base.

3. Un robinet de vidange suivant la revendication 2, caractérisé en ce que l'élément conique (37) est connecté à l'élément de vanne (15) au moyen d'une partie plus étroite (39) ayant une section plus petite que celle de la surface de base de l'élément conique, ladite surface de base étant pourvue d'un bombage (40) s'étendant autour de la partie plus étroite et dans lequel s'ouvre le passage (18).

4. Un robinet de vidange suivant l'une quelconque des revendications précédentes, caractérisé en ce que la surface de l'élément piston (17) est 10-40% plus grande que la surface de passage libre dans le siège (11) de la vanne.

5. Un robinet de vidange suivant l'une quelconque des revendications précédentes, caractérisé en ce que le moyen de déplacement (6) comprend un piston auxiliaire (25) logé dans un boîtier cylindrique (26) et connecté à une extrémité d'une tige (22), dont l'autre extrémité est connectée à l'élément piston (17), un moyen étant présent pour actionner le piston auxiliaire sur deux côtés.

6. Un robinet de vidange suivant l'une quelconque des revendications précédentes, caractérisé en ce que la chambre cylindrique (13) est formée par un couvercle pouvant être monté dans le boîtier (9; 51) comprenant une paroi d'extrémité (21) et un manchon s'étendant de la paroi d'extrémité, pouvant se loger dans le boîtier.

7. Un robinet de vidange suivant l'une quelconque des revendications précédentes, caractérisé en ce que les moyens de déplacement (6,8) sont espacés de la chambre cylindrique (13).

8. Un robinet de vidange suivant les revendications 5-7, caractérisé en ce que le boîtier cylindrique (26) est connecté au boîtier (9; 51) du robinet de vidange (5; 50) au moyen de manchons d'écartement (31), la tige (22) s'étendant à travers une ouverture dans la paroi du boîtier cylindrique (26) et une ouverture dans la paroi d'extrémité (21) entre les manchons d'écartement et comprenant un moyen d'indication (32) pour déterminer la position de l'élément vanne (15) dans le robinet de vidange.

9. Un robinet de vidange suivant l'une quelconque des revendications 5-8, caractérisé en ce qu'on prévoit des deux côtés du piston auxiliaire (25) une partie cylindrique dressée (33, 35) ayant une section plus petite que celle du piston auxiliaire (25), le boîtier cylindrique (26) comprenant des parois d'extrémité (27, 28) pourvus, à leur face intérieure, de renfoncements cylindriques (34, 36) ayant une section correspondant pratiquement à celle des parties dressées (33, 35), la hauteur des parties dressées (33, 35) étant supérieure à la profondeur des renfoncements (34, 36).

10. Un robinet de vidange suivant l'une quelconque des revendications 5-9, caractérisé par un dispositif de contrôle (8) pourvu d'un compresseur de fluide (43) connecté à une première tuyauterie (7') et à une seconde tuyauterie (7'') connectées au boîtier (26) du piston auxiliaire (25), et un moyen de commutation (47), assurant, dans une première position, l'alimentation du fluide vers le boîtier cylindrique (26) par l'intermédiaire de la première tuyauterie (7') et l'évacuation du fluide du boîtier cylindrique (26) par l'intermédiaire de la seconde tuyauterie (7''), et, dans une deuxième position, assurant l'alimentation du fluide vers le boîtier cylindrique (26) par l'intermédiaire de la seconde tuyauterie (7'') et l'évacuation du fluide du boîtier cylindrique (26) par l'intermédiaire de la première tuyauterie (7'), et un moyen de régulation (45, 46), veillant, à la fois dans la première position et dans la seconde position du moyen de commutation (47), à ce que l'alimentation en fluide soit plus rapide que l'évacuation de celui-ci.
